# EUROPEAN PATENT APPLICATION

(11) **EP 1 115 231 A2**
(43) Date of publication of application: **11.07.2001**
(21) Application number: 00107788.2
(22) Date of filing: 11.04.2000
(51) Int. Cl.: H04L 12/58

(54) **Method and apparatus for electronic mail communication**

(30) Priority: 06.01.2000 KR 0000406
(71) Applicant: Hee Jeoung Park of Mido Apt. 302-1302, Seoul (KR)
(72) Inventor: Park, Hee Jeoung, Seoul (KR)
(74) Representative: Turi, Michael, Dipl.-Phys.

(57) **Abstract**

In electronic mail communications between a remote sending system and a remote receiving system, the remote sending system is allowed to construct a message which will be sent to the remote receiving system and, then, the message is received from the remote sending system with a sender identification of the remote sending system attached as a message header. After the sender identification of the remote sending system is replaced with an identification code specific to the message, thereby itemizing the sender identification and the identification code as a mail database, the message is transmitted to the remote receiving system with the identification code attached as the message header or incorporated into the message itself.

## Description

The present invention relates to a method and apparatus for electronic mail communication; and, more particularly, to a method and apparatus capable of communicating in electronic mails with anonymity.

A network, e.g., an internet, comprises a vast number of computers and computer networks that are interconnected with each other through communications links. The interconnected computers exchange information by using various services, such as electronic mail, Gopher and the World Wide Web (WWW). The WWW service allows a server computer system, i.e., Web server or Web site to send graphical Web pages of information to a remote client computer system in such a way that the remote client computer system can display the Web pages. Each resource, e.g., computer or Web page of the WWW is uniquely identifiable by a Uniform Resource Locater (URL). To view a specific Web page, a client computer system specifies the Web page in a request, e.g., a HyperText Transfer Protocol (HTTP) request to the URL, wherein the request is forwarded to the Web server that supports the Web page. When the Web server receives the request, it sends the Web page to the client computer system. When the client computer system receives the Web page, it typically displays the Web page by using a browser. The browser is a special-purpose application program that effects the requesting of Web pages and the displaying of Web pages.

Currently, Web pages are typically defined by using HyperText Makeup Language (HTML), Dynamic HTML, Java Scripts, CGI and so on. The HTML provides a standard set of tags that define how a Web page is to be displayed. At the request of a user to display a Web page, the browser sends a request to the Web server to transfer to the client computer system an HTML document that defines the Web page. When the requested HTML document is received by the client computer system, the browser displays the Web page as defined by the HTML document. The HTML document contains various tags that control the displaying of text, graphics, controls and other features. The HTML document may contain URLs of other Web pages available on that Web server or other Web servers.

The WWW is especially conducive to allowing individuals to send messages to one another from virtually any location in the world at virtually any time of day. Among these services to allow individuals to send messages, electronic mail (E-mail) is arguably the most familiar and is provided by every Internet Service Provider (ISP) and in other ways as well. E-mail services may also be provided on other networks, such as Wide Area Networks (WAN) and the like.

Even though E-mail services have become commonplace and reliable, there are still limitations. Since, for example, the sender identification needs to be transferred to the recipient with the electronic mail, a message which requires anonymity, e.g., advice, proposal, praise, thanks and so on is impossible to be transmitted in the conventional electronic mail while maintaining the sender's anonymity.

It is, therefore, an object of the present invention to provide a method and apparatus capable of communicating in electronic mails with anonymity.

In accordance with an aspect of the present invention, there is provided a method for enabling electronic mail communications to be conducted between a remote sending system and a remote receiving system, comprising the steps of:
allowing the remote sending system to construct a message which will be sent to the remote receiving system;
receiving the message from the remote sending system with a sender identification of the remote sending system attached as a message header;
replacing the sender identification of the remote sending system with an identification code specific to the message, thereby itemizing the sender identification and the identification code as a mail database; and
transmitting the message to the remote receiving system with the identification code attached as the message header or incorporated into the message itself.

The above and other objects and features of the present invention will become apparent from the following description of preferred embodiments given in conjunction with the accompanying drawings, in which:
Fig. 1 represents a block diagram for a Web server connected to a number of subscribers via network in accordance with the present invention;
Fig. 2 shows a flow chart illustrating a routine in which the mail Web server allows a sender to transmit an anonymous mail to a recipient anonymously in accordance with the present invention; and
Fig. 3 is a flow chart illustrating a routine in which the mail Web server allows the recipient to reply to the anonymous mail in accordance with the present invention.

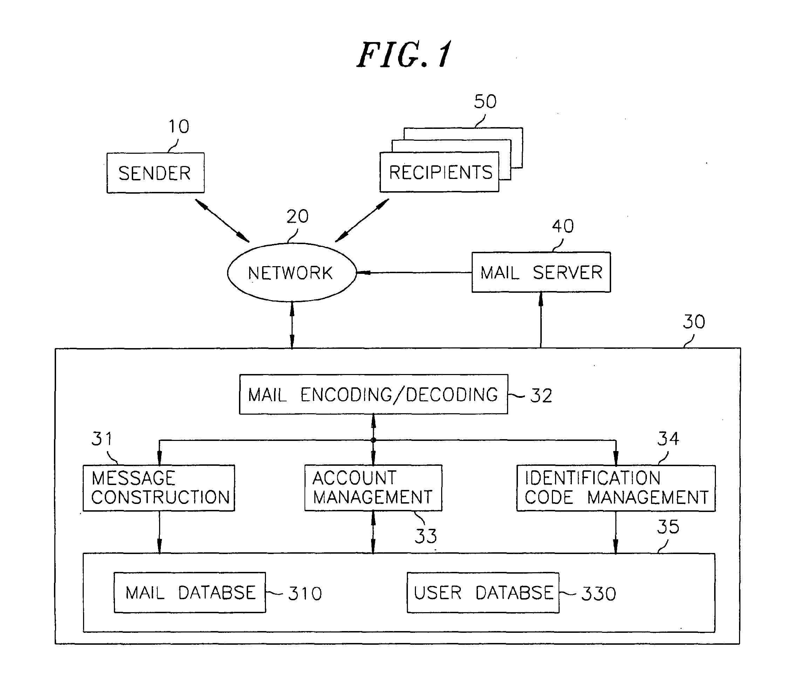

Referring to Fig. 1, there is illustrated a block diagram for a mail Web server 30 connected to a number of client's computers implemented via network 20 in accordance with the present invention, wherein the client's computers are assumed to be used by one or more subscribers. The mail Web server 30 allows the subscribers to communicate in electronic mails with anonymity. Each client's computer includes and executes a Web browser software application, that allows each client's computer to have an access to Hypertext Markup Language (HTML) Web pages and other data on various Web servers, such as the mail Web server 30 via the network 20. The Web browser software application includes mail construction pages, which can be downloaded over the network 20 from the mail Web server 30.

It is assumed for illustrative purpose that the client's computers are classified into a sender's computer and one or more recipient's computers. Since, however, the sender 10 may try to transmit an anonymous mail to recipients 50 who are not subscribers to anonymous mail service of the mail Web server 30, the recipients 50 need not be limited to the subscribers to the mail Web server 30. Although the recipient 50 can receive the anonymous mail without being a subscriber to the anonymous mail service of the mail Web server 30, the recipient 50 must be a subscriber to the mail Web server 30 in order to reply to the sender 10 in accordance with the present invention.

The network 20 includes a large number of public access points and communications are carried out by using Internet Protocol (IP). Internet Protocol is widely recognized as the de facto standard way of communicating data.

The mail Web server 30 comprises a message construction block 31, a mail encoding/decoding block 32, an account management block 33, an identification code management block 34 and a database 35. The database 35 has a mail database 310 and a user database 330.

The message construction block 31 allows the sender 10 to prepare a message. Specifically, if a subscriber, i.e., the sender 10, has an access to the mail Web server 30 in order to transmit the message to other subscribers, the message construction block 31 allows the sender's computer to download the mail construction page for constructing messages therewith so that the sender's computer may construct the message with the mail construction page.

In case the sender 10 clicks an anonymous mail button so as to transmit the message to one or more recipients anonymously, the account management block 33 will operate to determine a message attribute of the message. In other words, the account management block 33 determines if an anonymous mail button is clicked by the sender 10 and, only when the anonymous mail button is clicked, the sender 10 will be shown a plurality of exemplary message attributes, e.g., advice message, proposal message, praise message, thanks message and so on.

In case the sender 10 selects one of the exemplary message attributes as the message attribute, the account management block 33 defines a representative account. For example, the representative account of the advice mail corresponds to 'advice'; the proposal mail 'proposal'; the praise mail 'praise'; the thanks mail 'thanks' and so on. Subsequently, the message attribute can be notified as the representative account in response to the sender's selection when the message is transmitted to one or more recipients. In another embodiment, the representative account may be predefined on a subscriber group basis so that the representative account may also represent information on a group of subscribers as well as the message attribute.

The identification code management block 34 assigns a message identification code to each message. The message identification code depends on not only each message itself but also the sender and the recipient thereof. If necessary, the message identification can be made to depend on a mail delivery time of each message. The message identification code is used to index each message.

The mail encoding/decoding block 32 encodes the message in order to transmit the message as an anonymous mail to one or more recipients 50 and, then, decodes a reply mail, i.e., a reply to the anonymous mail, in order to transmit the reply mail back to the sender 10. Specifically, the representative account and the message identification code are attached as a message header to generate the anonymous mail. If necessary, the message identification code can be made to be incorporated into the message. If the anonymous mail is responded with a reply mail, the mail encoding/decoding block 32 parses the reply mail into a reply message header and a reply message and, then, decodes the message header to determine an appropriate recipient to the reply mail, i.e., the sender 10 of the anonymous mail, among subscribers who have sent anonymous mails with the same representative account.

The mail server 40 receives the anonymous mail from the sender 10 and transmits it to one of the recipients 50 via the network 20 in accordance with the message identification code. The mail server 40 also receives the reply mail, which is decoded by the mail encoding/decoding block 32 to find the appropriate recipient for the reply mail and transmits the reply mail back to the sender 10 via the network 20.

The mail database 310 itemizes message information including contents of the message header in accordance with the present invention. Specifically, for each message, the mail database 310 is configured to store not only the message itself but also the electronic mail addresses of the sender 10 and one of the recipients 50, the representative account and the message identification code of the message and so on. The mail is transmitted to one of the recipients 50 with the representative account and the message identification code attached on behalf of the sender identification or the sender's electronic mail address so that each recipient 50 cannot find out the sender identification. Subsequently, the message identification code is used only to trace the original sender 10 of the anonymous mail among a plurality of subscribers related to the anonymous mail service.

In the meantime, the user database 330 stores general information on the users including the sender 10 and one or more recipients 50. Since the sender 10 must be a subscriber to the mail Web server 30, the user database 330 stores the sender identification, the sender's electronic mail address, a password for the electronic mail address, addresses, telephone numbers and so on. In case one or more recipients 50 are identified as subscribers to the mail Web server 30, the user database 330 stores the recipient identifications, the recipient's electronic mail addresses, passwords of the electronic mail addresses, addresses, telephone numbers and so on. However, in case one or more recipients 50 are not subscribers, the user database 330 offers an additional storage means for storing information on one or more recipients 50 who are not subscribers. The additional storage means is used to store the electronic mail addresses of one or more recipients 50 who are not subscribers but predetermined by the sender 10.

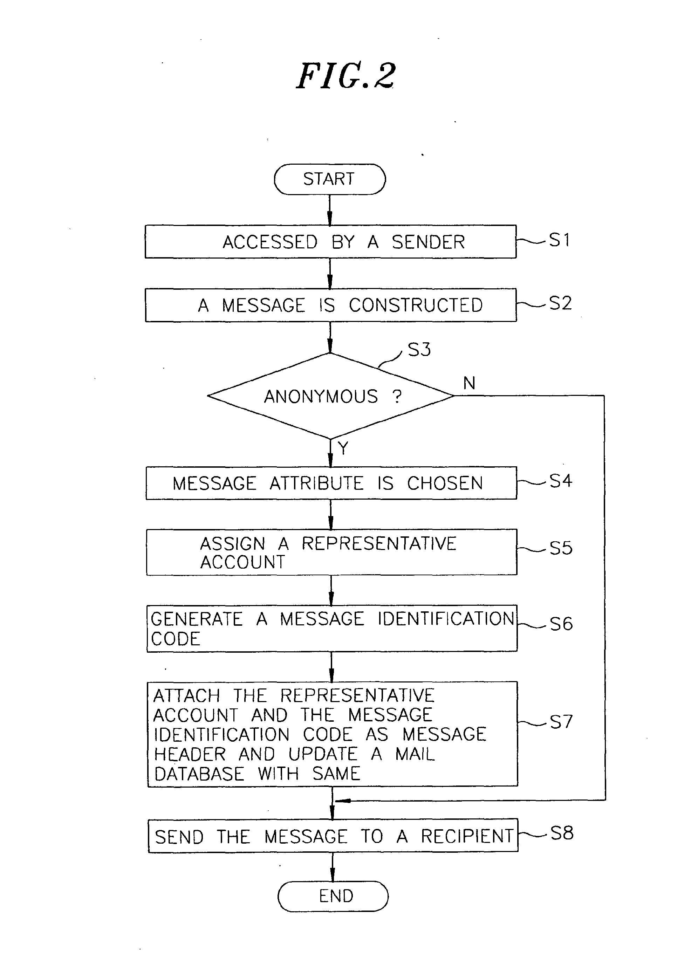

Referring to Fig. 2, there shows a flow chart illustrating a routine in which the mail Web server 30 allows a sender 10 to transmit an anonymous mail to a recipient 50 via a network 20 with anonymity. To enable anonymous mail communications to be conducted in accordance with the present invention, the sender 10 must be a subscriber to an anonymous mail service related the mail Web server 30 but the recipients need not subscribe to the anonymous mail service. However, the recipient has to subscribe to the anonymous mail service to be allowed to reply to the anonymous mail.

If the sender 10 enters the sender identification and the password thereof in order to transmit an anonymous mail to one of the recipients 50 by using the mail Web server 30, a Web browser in the sender's computer sends a request for the mail construction page to the mail Web server 30 through the network 20. At step S1, the message construction block 31 in the mail Web server 30 retrieves the request for the mail construction page to identify the sender 10.

After the sender 10 accesses the mail Web server 30, at step S2, the message construction block 31 provides the sender's computer with the mail construction page in a graphical representation in order to allow the sender 10 to construct a message, wherein the mail construction page is formatted in an ordinary mail construction format added with options for anonymity functionalities such as an anonymity button and so on. Not only the sender identification but also the recipient identification is attached to the mail as header information. The electronic mail address of the recipient identification can be replaced with the recipient identification.

At step S3, the sender 10 determines whether the message is transmitted to one of the recipients 50 with anonymity or not. Specifically, the mail construction page preferably includes the anonymity button linked to an anonymous mail Web page to assign an anonymous attribute to the message. If the sender 10 clicks the anonymity button in order to transmit the message with anonymity, the routine goes to step S4 and, if otherwise, the routine goes to step S8.

At step S4, the message construction block 31 allows the sender 10 to select a message attribute of the message. Specifically, a lot of exemplary message attributes, e.g., advise, proposal, praise and thanks and so on are shown to the sender 10. If the sender 10 selects one of the mail attributes, at step S5, the account management block 33 assign to the message a representative account based on the attribute to be selected.

At step S6, the identification code management block 34 generates an identification code for the message. The identification code will be used to index the message on behalf of the sender identification.

At step S7, the mail encoding/decoding block 32 attaches the representative account and the identification code to the message as message header to generate an anonymous mail related with the sender identification. The sender identification and the electronic mail address must be replaced with the representative account and the identification code so that the sender identification cannot be transmitted to one of the recipients 50.

The mail encoding/decoding block 32 updates the mail database 310 so that the sender identification, the recipient identification, the electronic mail addresses of the sender and the recipient, the representative account and the identification code are itemized in the mail database 310. The mail encoding/decoding block 32 transfers the anonymous mail to the mail server 40.

At step S8, the mail server 40 transmits the mail to the recipient 50. In case the message is delivered in the anonymous mail, the message header includes the representative account and the identification code for the message on behalf of the sender identification and the electronic mail address thereof.

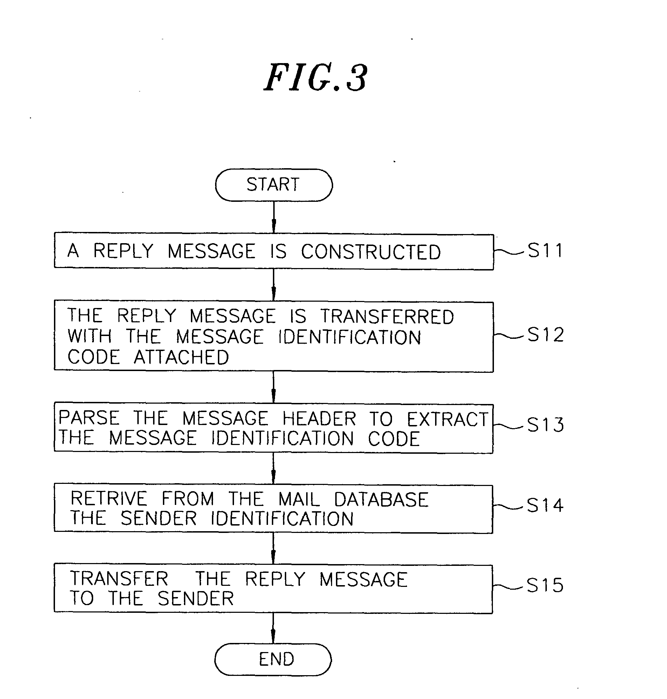

Referring to Fig. 3, there is a flow chart illustrating a routine in which the mail Web server 30 allows the recipient 50 to reply to the anonymous mail. The recipients 50 may receive the anonymous mail without being a subscriber to the mail Web service of the mail Web server 30, but the recipients 50 must subscribe to the mail Web service in order to reply to the anonymous mail as described above.

Now assume that the recipient receiving the anonymous mail has an access to the mail Web server 30 to reply to the anonymous mail. It is preferable that the recipient replies to the anonymous mail by clicking a reply button presented on the anonymous mail, wherein the reply button is linked to the mail Web server 30. The recipient must be confirmed as a subscriber of the mail Web server 30.

At step S11, the recipient constructs a reply message by using the mail construction block 31 in the mail Web server 30 as described in step S2.

At step S12, if the recipient clicks a message end button on the mail Web page after completing constructing the reply message, the reply message is transferred to the mail encoding/decoding block 32 with the identification code attached as a reply message header.

At step S13, the mail encoding/decoding block 32 parses the reply message header to extract the identification code and, at step S14, the identification code management block 34 retrieves the mail database 310 to find the sender identification of the anonymous mail, i.e., the recipient identification of the reply message, and the electronic mail address thereof and, consequently, the identification code can be replaced with the electric mail address of the sender. At step S15, the reply message is transferred to the sender via the mail server 40.

While the present invention has been described with respect to the particular embodiments, it will be apparent to those skilled in the art that various changes and modifications may be made without departing from the scope of the invention as defined in the following claims.

## Claims

1. A method for enabling electronic mail communications to be conducted between a remote sending system and a remote receiving system, comprising the steps of:
allowing the remote sending system to construct a message which will be sent to the remote receiving system;
receiving the message from the remote sending system with a sender identification of the remote sending system attached as a message header;
replacing the sender identification of the remote sending system with an identification code specific to the message, thereby itemizing the sender identification and the identification code as a mail database; and
transmitting the message to the remote receiving system with the identification code attached as the message header.

2. The method of claim 1, further comprising the steps of:
permitting the remote receiving system to construct a reply message which will be sent back to the remote sending system;
obtaining the reply message from the remote receiving system with the identification code attached as a reply message header;
retrieving from the mail database the sender identification of the remote sending system based on the identification code; and
transferring the reply message to the remote sending system.

3. The method of claim 2, wherein said identification code is further specific to a recipient identification of the remote receiving system.

4. The method of claim 3, wherein an attribute of the message. is notified to the remote receiving system on behalf of the sender identification.

5. The method of claim 1, wherein the identification code is further incorporated into the message itself.

6. A computer readable medium for enabling electronic mail communications to be conducted between a remote sending system and a remote receiving system, comprising:
code for allowing the remote sending system to construct a message which will be sent to the remote receiving system;
code for receiving the message from the remote sending system with a sender identification of the remote sending system attached as a message header;
code for replacing the sender identification of the remote sending system with an identification code specific to the message, thereby itemizing the sender identification and the identification code as a mail database; and
code for transmitting the message to the remote receiving system with the identification code attached as the message header or incorporated into the message itself.

7. The computer readable medium of claim 6, further comprising:
code for permitting the remote receiving system to construct a reply message which will be sent back to the remote sending system;
code for obtaining the reply message from the remote receiving system with the identification code attached as a reply message header;
code for retrieving from the mail database the sender identification of the remote sending system based on the identification code; and
code for transferring the reply message to the remote sending system.

8. The computer readable medium of claim 7, wherein said identification code is further specific to a recipient identification of the remote receiving system.

9. The computer readable medium of claim 8, wherein an attribute of the message is notified to the remote receiving system on behalf of the sender identification.

10. The computer readable medium of claim 6, wherein the identification code is incorporated into the message.

11. An apparatus for enabling electronic mail communications to be conducted between a remote sending system and a remote receiving system, comprising:
means for allowing the remote sending system to construct a message which will be sent to the remote receiving system;
means for receiving the message from the remote sending system with a sender identification of the remote sending system attached as a message header;
means for replacing the sender identification of the remote sending system with an identification code specific to the message;
means for itemizing the sender identification and the identification code as a mail database; and
means for transmitting the message to the remote receiving system with the identification code attached as the message header or incorporated into the message itself.

12. The apparatus of claim 11, further comprising:
means for permitting the remote receiving system to construct a reply message which will be sent back to the remote sending system;
means for obtaining the reply message from the remote receiving system with the identification code attached as a reply message header;
means for retrieving from the mail database the sender identification of the remote sending system based on the identification code; and
means for transferring the reply message to the remote sending system.

13. The apparatus of claim 12, wherein said identification code is further specific to a recipient identification of the remote receiving system.

14. The apparatus of claim 13, wherein an attribute of the message is notified to the remote receiving system on behalf of the sender identification.

15. The apparatus of claim 11, wherein the identification code is incorporated into the message.
